# EUROPÄISCHE PATENTANMELDUNG

(11) **EP 1 630 519 A1**
(43) Veröffentlichungstag der Anmeldung: **01.03.2006**
(21) Anmeldenummer: 05011308.3
(22) Anmeldetag: 25.05.2005
(51) Int. Cl.: G01B 11/24

(54) **Modularer Bestandteil für Vorrichtungen zur Ausführung der dreidemensionalen virtuellen Rekonstruktion der Oberflächen von Körpern sowie derartige eine Vielzahl von modularen Bestandteilen umfassende Vorrichtung**

(30) Priorität: 24.08.2004 IT BZ20040044
(71) Anmelder: MICROTEC S.r.l., 39042 Bressanone (Bolzano) (IT)
(72) Erfinder: Giudiceandrea, Federico, 39042 Bressanone (BZ) (IT)
(74) Vertreter: Ghioni, Carlo Raoul Maria

(57) **Zusammenfassung**

Ein modularer Bestandteil (1) von Vorrichtungen zur Ausführung, in einem kartesischen Koordinatensystem (X,Y,Z), der dreidimensionalen virtuellen Rekonstruktion der Oberflächen von Körpern (2). Er umfasst mindestens eine Laserlichtquelle (3), die ein ebenes Laserlichtbündel (4) aussendet das auf der Oberfläche des Körpers (2) einfällt, wobei von diesem ein Streifen (5) beleuchtet wird. Er umfasst auch eine erste Matrixkamera (6a), die eine eigene Fotografie des beleuchteten Streifens (5) erzeugt. Der Abstand zwischen der Laserlichtquelle (3) und jedem Punkt des beleuchteten Streifens (5) wird mit der sogenannten Lasertriangulation berechnet.

Erfindungsgemäss umfasst er überdies eine zweite Matrixkamera (6b) mittels der ein zweites Mal mit der sogenannten Lasertriangulation der Abstand zwischen der Laserlichtquelle (3) und jedem Punkt des beleuchteten Streifens (5) berechnet wird.

Eine Steuereinheit (8) steuert den Betrieb der Laserlichtquelle (3) und der beiden Matrixkameras (6a,6b). Eine Verarbeitungseinheit (9) vergleicht zueinander Punkt für Punkt des beleuchteten Streifens (5) die von den beiden Matrixkameras (6a,6b) erzeugten Fotografien, um den Neigungswinkel (α) der Senkrechte zur Tangentialebene des Punktes gegenüber der Messebene des modularen Bestandteils zu bestimmen.

## Beschreibung

Die Erfindung betrifft einen modularen Bestandteil für Vorrichtungen zur Ausführung, in einem kartesischen Koordinatensystem, der dreidimensionalen virtuellen Rekonstruktion der Oberflächen von Körpern, die, längs einer bekannten Vorschubrichtung und mittels eines Fördermittels, eine bekannte Messebene der Vorrichtung durchqueren.

Die Bedürfnis einer Rekonstruktion auf virtueller, dreidimensionaler Weise, um den Verlauf der Oberfläche eines Körpers zu kennen, wird in zahlreichen technischen Gebieten, empfunden, insbesondere dort, wo diese Kenntnis es erlaubt, auf optimale Art und Weise nachfolgende, automatische Bearbeitungen einzustellen, denen der Körper zu unterziehen ist und die ausschlaggebend von dessen Abmessungen, dessen Volumen oder dessen Formen abhängen.

Typischerweise ist ein solches technisches Gebiet jenes der Bearbeitungen, denen in den Sägewerken das Holz in der Form von Stämmen, Balken oder Brettern unterliegt.

Um den Rohstoff besser ausnützen und größtmögliche Stücke aus Massivholz erhalten zu können ist grundlegend, auf sehr genaue Weise die wirkliche Ausbildung des im allgemeinen, vor allem bezüglich der Stämme, nur wenig gleichförmigen Körpers zu kennen. Schon eine Differenz nur eines Millimeters in der Festlegung der Abmessung kann zu einer beträchtlichen Verschwendung führen, wenn man die Länge in Betracht zieht, die ein Stamm erreichen kann.

Überdies muss dabei die Anwesenheit der Rinde, der Abschrägungen, der Knoten, der Löcher und der Verschmutzung in angemessner Weise in Betracht gezogen werden, die deutlich die Messvorgänge solcher Körper erschweren.

Folglich wurde mit den Jahren eine Vielzahl von Vorrichtungen entwickelt, denen die Tatsache gemeinsam ist, dass ein Vorschub des Körpers durch einen Messbereich der Vorrichtung hindurch vorgesehen wird, in welchem ein Oberflächenabschnitt des Körpers beleuchtet wird, dass das durch diese beleuchtete Oberfläche reflektierte Licht erfasst wird und dass dann versucht wird, indem dieses reflektierte Lichte untersucht wird, die wirkliche Ausbildung der beleuchteten Oberfläche festzustellen, die annäherungsweise auf virtuelle Art rekonstruiert wird, indem bekannte mathematische und geometrische Kenntnisse verwendet werden.

Die einfachste bekannte Vorrichtung dazu umfasst eine Laserlichtquelle, die einen vertikalen Laserlichtstrahl abgibt, der an einem, einem infinitesimalen Abschnitt entsprechenden Oberflächepunkt einfällt, und eine lineare Kamera, die das vom Oberflächenpunkt reflektierte Licht empfängt. Die optische Achse der linearen Kamera liegt schräg zur Vertikale und bestimmt, zusammen mit der Vertikale, die ebenfalls vertikale Messebene.

Unter Verwendung der sogenannten bekannten Technik der Lasertriangulation, kann in dieser Messebene der Abstand zwischen der Laserlichtquelle und dem beleuchteten Oberflächenpunkt bestimmt werden. Dieser Abstand ist ein Wert für die Dicke des Körpers an diesem Punkt, dadurch gegeben, dass an seiner abgewandten Seite der Körper auf der Auflageebene des Fördermittels aufliegt.

Zur Bestimmung dieses Abstandes wird die Tatsache ausgenützt, dass dieser beleuchtete Oberflächenpunkt, die Laserlichtquelle und der optische Mittelpunkt der Kamera, die das reflektierte Licht empfangen hat, als die drei Scheitel eines rechteckigen Dreiecks angesehen werden können, der den rechten Winkel in der Laserlichtquelle hat. Die Hypotenuse dieses rechtwinkeligen Dreieckes ist durch das Segment gegeben, das den optischen Mittelpunkt und den Oberflächenpunkt verbindet, Segment, das dann bis zu jenem Pixel der Kamera fortgesetzt wird, welches das reflektierte Licht empfangen hat. Da also der Abstand zwischen der Laserlichtquelle und dem optischen Mittelpunkt (d.h. eine der beiden Katheten des Dreieckes) bekannt ist, er ist nämlich eine vorgegebene Abmessung, und da der von der genannten Kathete und von dem, den optischen Mittelpunkt und den beleuchtete Oberflächenpunkt verbindenden Segment gebildete Winkel berechenbar ist, weil er von der Position des Pixels abhängt, das das reflektierte Licht empfangen hat, kann mit bekannten Trigonometriekenntnissen auch der Abstand, längs der Vertikale, zwischen der Lichtquelle und dem beleuchteten Oberflächepunkt (d.h. die andere Kathete des Dreiecks) berechnet werden.

Wird nun, aus Bequemlichkeit, die Laserlichtquelle als Ursprung eines Systems kartesischer Koordinaten angenommen, kann man beispielsweise die Koordinate Z längs der Vertikale, die Koordinate X längs der die Laserlichtquelle und den optischen Mittelpunkt der Kamera verbindenden Gerade und die Koordinate Y senkrecht zu den Achsen X und Z anordnen. In einem solchen Koordinatensystem ist die Position des beleuchteten Punktes bekannt, da die Koordinate Z mit der Lasertriangulation berechnet wird, während wahlweise eine der Koordinaten X und

Y auf bekannte und einstellbare Art von der Position abhängt, mit der der Körper im Messbereich angeordnet wird, während die andere nicht interessiert.

Wird der Körper durch den Messbereich mit Verstellungen bekanntes Ausmaßes längs der Richtung X oder Y vorgeschoben, ist es möglich, diesen Vorgang für eine angenäherte Vielzahl von Oberflächenpunkten zu wiederholen. Erfolgt die Verstellung längs der Richtung X, so werden die Punkte alle eine gemeinsame Koordinate Y besitzen, die auf bekannte und einstellbare Art und Weise von der Position abhängt, in der sich der Körper im Messbereich befindet, während die Koordinate X auf bekannte und einstellbare Weise von der Vorschubbewegung abhängt. Erfolgt die Verstellung längs der Richtung Y, werden die Punkte alle dieselbe Koordinate X besitzen, die auf bekannte und einstellbare Weise von der Position abhängt, in der sich der Körper im Messbereich befindet, während die Koordinate Y auf bekannte und einstellbare Weise von der Vorschubbewegung abhängt. Die jeweiligen Koordinaten Z werden hingegen mit der Lasertriangulation berechnet.

Wenn dann die genannten Punkte miteinander verbunden werden, wird eine zweidimensionale Rekonstruktion des Umrisses eines Schnittes längs der Richtung X oder längs der Richtung Y des Körpers erhalten, die dann desto genauer (d.h. ununterbrochen und nicht gestückelt) sein wird je näher zueinander die Punkte sein werden.

Der Hauptnachteil dieser Vorrichtung ist die Erstellung einer zweidimensionalen Rekonstruktion, d.h. eines einzigen Schnittes, des Körpers.

Um dies zu beheben, werden gemäß einer bekannten Verbesserung eine Laserlichtquelle, die ein ebenes Laserlichtbündel aussendet anstatt einer Laserlichtquelle die einen Laserlichtstrahl aussendet und eine Matrixkamera anstelle einer linearen Kamera verwendet. Auf diese Art und Weise ist es möglich, ohne dass eine Vorschubbewegung notwendig wäre, die Koordinaten eines Oberflächenstreifens zu bestimmen, der durch die Nacheinanderfolge der infinitesimalen Flächenabschnitte (Punkte), die durch das ebene Laserlichtbündel beleuchtet werden, gebildet ist. In diesem Fall ist es das ebene Laserlichtbündel, das die Messebene bestimmt.

Wiederum kann aus Bequemlichkeit die Laserlichtquelle als Ursprung eines kartesischen Koordinatensystems angenommen werden, und man kann z.B. die Koordinate Z längs der Vertikale, die Koordinate X zugehörig zur Messebene und senkrecht zur Koordinate Z und die Koordinate Y senkrecht zu den X und Z Achsen anordnen. In einem solchen System sind die Koordinaten der, den beleuchteten Streifen bildenden Punktefolge bekannt, da Punkt für Punkt die Koordinaten Z mit der Lasertriangulation berechnet werden, die Koordinate X von der Position des zugeordneten Pixels abhängt, das den reflektierten Lichtstrahl empfängt und die Koordinate Y auf bekannte und einstellbare Weise von der Position abhängt, in der der Körper im Messbereich angeordnet ist.

Wird der Körper durch den Messbereich mit bekannten Verstellungen längs der Richtung Y vorgeschoben, ist es möglich, diesen Vorgang für eine angenäherte Vielzahl von Oberflächenstreifen zu wiederholen. Für jeden Punkt wird die Koordinate Z mit der Lasertriangulation berechnet, die Koordinate X hängt von der Position des zugeordneten Pixels ab, der den reflektierten Lichtstrahl empfängt und die Koordinate Y hängt auf bekannte und einstellbare Weise von der Vorschubbewegung ab.

Werden dann die Streifen miteinander verbunden, wird eine dreidimensionale Rekonstruktion der Oberfläche des Körpers erhalten, die desto genauer (d.h. ununterbrochen und nicht gestückelt) sein wird, je näher zueinander die Streifen sein werden.

Der größte Nachteil dieser Vorrichtung besteht darin, dass zur Erzielung von genügend zuverlässigen Ergebnissen eine sehr dichte Abtastung des Körpers notwendig ist, was die Prüfgeschwindigkeit des Körpers und daher die Produktivität beeinträchtigt. Darüberhinaus ist vor der Zustellung der Körper zur Vorrichtung eine sorgfältige Vorbereitungsarbeit notwendig, weil die Körper in Position gebracht und längs ihrer Längsrichtung zugeführt werden müssen.

Die Aufgabe der vorliegenden Erfindung ist die Entwicklung eines modularen Bestandteiles, der bei Verwendung in Vorrichtungen zur Durchführung der dreidimensionalen, virtuellen Rekonstruktion der Oberflächen von Körpern, mit Einfachheit und unter Verwendung immer derselben Bestandteile die Herstellung jener Vorrichtung erlaubt, die für die lokalen Betriebssituation die geeignetste ist, wie z.B.: Anwesenheit von sehr langen Körpern, Zustellung der Körper längs ihrer Längsausdehnung oder quer zu derselben, Notwendigkeit nur besondere Abmessungsparameter zu erfassen, wie z.B. die Stärke, starke Verschiedenheit der Körperformen und ähnliche Bedingungen.

Diese Aufgabe wird durch die im kennzeichnenden Teil des Anspruchs 1 angegebenen Merkmale gelöst.

Der Erfindung liegt der geniale Gedanke zugrunde, dass das Vorsehen einer zweiten Matrixkamera es erlaubt, eine neue Information, wie jene des Niveaus der Stärke des reflektierten Lichtes, nützlich zu verwenden. Diese Information wird genutzt, um eine wichtige Kontrolle über die Genauigkeit der ermittelten kartesischen Koordinaten durchzuführen.

Es ist nämlich bekannt, dass die Lasertriangulation lokal Interferenzen, auch schwerwiegende Interferenzen, unterliegen kann, die das Ergebnis bedeutsam verändern. In diesem Fall entsteht beim Verbindungsschritt zwischen zwei anliegenden Punkte eine schwerwiegende Diskontinuität.

Dank der Erfindung ist eine erste Verbesserung schon dadurch gegeben, dass es möglich ist, unter Verwendung der zweiten Matrixkamera, eine zweite Lasertriangulation durchzuführen und um dann ein Mittelwert der beiden Ergebnisse wiederzugeben. Die große Neuheit ist jedoch durch die Möglichkeit gegeben, immer unter Verwendung der beiden vorgesehenen Kameras, den Neigungswinkel der Senkrechten zur Tangentialbene des Oberflächenpunktes zu kennen, d.h. die Neigung der Fläche in diesem Punkt.

Dank dieser Information, kann an jedem Punkt überprüft werden, ob die, durch die Lasertriangulation erhaltenen Koordinaten der anliegenden Punkte mit der, in diesem Punkt festgestellten Neigung vereinbar sind.

Es ist klar, dass ein solcher scharfer Kontrollvorgang ausschließt, dass bei der dreidimensionalen, virtuellen Rekonstruktion große Diskontinuitäten zwischen anliegenden Punkten der Oberfläche vorkommen können.

Die erfindungsgemäße Lösung verbessert daher erheblich die Genauigkeit und die Zuverlässigkeit der dreidimensionalen, virtuellen Rekonstruktion.

Eine weitere Aufgabe der vorliegenden Erfindung ist die Entwicklung einer Vorrichtung zur Ausführung der dreidimensionalen, virtuellen Rekonstruktion der Oberflächen von Körpern, die solche modulare Bestandteile benutzt.

Diese Aufgabe wird durch die im kennzeichnenden Teil des Anspruchs 4 angegebenen Merkmale gelöst.

Die weiteren Ansprüche 5, 6 und 7 betreffen Ausführungsformen, bei denen die modularen Bestandteile, die für sich alleine betrachtet immer gleich bezüglich des Aufbaus und der Betriebsweise sind, in verschiedenen Anzahlen, in verschiedenen Stellen oder mit verschiedenen Ausrichtungen in Abhängigkeit des Ergebnisses, das man erreichen will, oder der Art der Körper oder der Vorschubsrichtung angeordnet werden.

Weitere Vorteile und Merkmale der Erfindung gehen näher aus der nachfolgenden Beschreibung von Ausführungsbeispielen der Erfindung hervor, die beispielsweise, jedoch nicht begrenzend aufgrund der beigefügten Zeichnungen erläutert sind. Es zeigen,
- Figur 1: eine schematische Axonometrie eines erfindungsgemäßen modularen Bestandteiles,
- Figur 2: schematisch im Schnitt einen Betriebsschritt des modularen Bestandteiles aus Figur 1,
- Figur 3: eine erste Ausführungsform einer Vorrichtung, die eine Vielzahl von modularen Bestandteilen nach Figur 1 umfasst,
- Figur 4: eine zweite Ausführungsform einer Vorrichtung, die eine Vielzahl von modularen Bestandteilen gemäß Figur 1 umfasst,
- Figur 5: eine dritte Ausführungsform einer Vorrichtung, die eine Vielzahl von modularen Bestandteilen gemäß der Figur 1 umfasst.

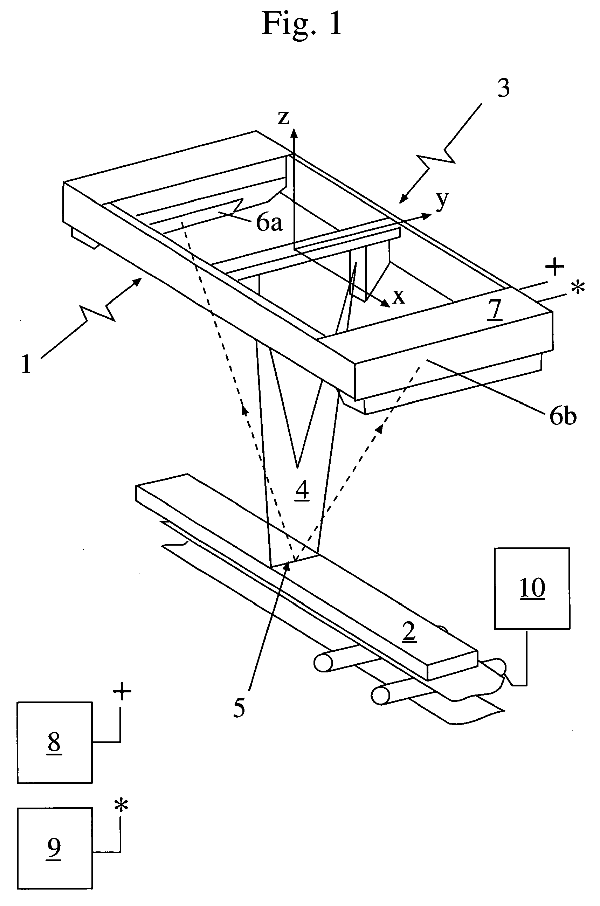

In Figur 1 ist mit 1 ein modularer Bestandteil von Vorrichtungen zur Ausführung, in einem kartesischen Koordinatensystem X, Y, Z, der dreidimensionalen, virtuellen Rekonstruktion der Oberflächen von Körpern 2 angegeben, die eine bekannte Messebene der Vorrichtung durchqueren.

Dieser Vorschub erfolgt längs einer bekannten Richtung und mittels eines in der Zeichnung schematisch angegebenen Fördermittels bekannter Art, das mit einer den Vorschubsweg messenden Vorrichtung 10 versehen ist.

Der modulare Bestandteil 1 umfasst mindestens eine Laserlichtquelle 3 und eine erste Matrixkamera 6a.

Die Laserlichtquelle 3 ist in einer Position bekannter Koordinaten angeordnet und strahlt, auf Befehl, ein ebenes Laserlichtbündel 4 aus. Dieses ebene Laserlichtbündel 4 bestimmt die Messebene des modularen Bestandteiles und fällt auf der Oberfläche des Körpers 2 ein, wobei ein Streifen 5 desselben beleuchtet wird. Wenn die Abmessung des Körpers 2 dies verlangt, kann die Laserlichtquelle 3 aus mehreren einzelnen Lichtsendern bestehen, deren einzelnen Lichtbündel miteinander ein breiteres Lichtbündel bilden. In Figur 1 ist, beispielsweise, die Laserlichtquelle 3 aus zwei Lichtsendern gebildet.

Die erste Matrixkamera 6a erzeugt ihrerseits auf Befehl eine eigene Fotografie des beleuchteten Streifens 5 und ist in Position bekannter Koordinaten derart angeordnet, dass ihre optische Achse mit der Messebene des modularen Bestandteiles einen spitzen Winkel bildet. In Figur 1 wurde aus Verständlichkeitsgründen der Zeichnung ein einziger reflektierter Lichtstrahl dargestellt, derer Anzahl ist jedoch der Pixelanzahl der Kamera 6a gleich.

Der Abstand zwischen der Laserlichtquelle 3 und jedem Punkt des beleuchteten Streifens 5 wird mit der sogenannten, schon erläuterten Lasertriangulation gemessen und berechnet.

Das Bezugssystem von kartesischen Koordinaten X, Y, Z kann beliebig und je nach Bequemlichkeit ausgewählt werden. In Figur 1 wurde der Ursprung beispielsweise im Schwerpunkt der Laserlichtquelle 3 angenommen, die Achse Z befindet sich längs der Senkrechten und die Achsen X und Y befinden sich in der zur Achse Z senkrechten Ebene, wobei die Achse X zusammenfallend mit der bekannten Vorschubrichtung angeordnet ist.

Gemäß der Erfindung umfasst der modulare Bestandteil 1 überdies eine zweite Matrixkamera 6b und eine Aufnahme 7, auf der die Laserlichtquelle 3 und die beiden Matrixkameras 6a, 6b befestigt sind.

Die Aufnahme 7 ist mindestens von einer Seite her offen, um den Durchgang des Laserlichtes zu erlauben und weist zwei elektrische und/oder elektronische Anschlüsse auf, von denen einer an eine Steuereinheit 8 der Vorrichtung und der andere an eine Verarbeitungseinheit 9 der Vorrichtung anschliesst.

Die zweite Matrixkamera 6b ist in einer Position bekannter Koordinaten derart angeordnet, dass ihre optische Achse und die optische Achse der ersten Matrixkamera 6a sich symmetrisch auf gegenüberliegenden Seiten der Messebene des modularen Bestandteiles befinden. Analog zur ersten Kamera 6a erzeugt sie auf Befehl eine eigene Fotografie des beleuchteten Streifens 5. In Figur 1 ist aus Übersichtlichkeitsgründen der Zeichnung nur ein einziger reflektierter Lichtstrahl dargestellt, jedoch derer Anzahl ist der Pixelanzahl der Kamera 6b gleich.

Die Steuereinheit 8 steuert den Betrieb der Laserlichtquelle 3 und der beiden Matrixkameras 6a, 6b. Die Verarbeitungseinheit 9 wertet die Daten aus und berechnet die dreidimensionale, virtuelle Rekonstruktion. Sie kennt die Koordinaten der Laserlichtquelle 3 und der beiden Matrixkameras 6a, 6b sowie die Vorschubrichtung des Körpers 2 und die Koordinaten der sich in Bewegung befindlichen Auflageebene des Fördermittels.

Die Anwesenheit der zweiten Matrixkamera 6b erlaubt es ein zweites Mal mit der sogenannten Lasertriangulation den Abstand zwischen der Laserlichtquelle 3 und jedem Punkt des beleuchteten Streifens 5 zu messen und berechnen. Diese Tatsache ermöglicht einen ersten Vergleich mit dem berechneten Betrag dieses Abstandes, der mit der Verwendung der ersten Matrixkamera 6a berechnet wurde.

Die Anwesenheit der zweiten Matrixkamera 6b erlaubt es eine weitere, bedeutende Verbesserung der Zuverlässigkeit des rekonstruierten, virtuellen, dreidimensionalen Modells zu haben.

Gemäß der Erfindung bestimmt nämlich die Verarbeitungseinheit 9, indem Punkt für Punkt des beleuchteten Streifens 5 die von den beiden Matrixkameras 6a, 6b erzeugten Fotografien, insbesondere die von den beiden Matrixkameras 6a, 6b erfassten Helligkeitsunterschiede zueinander verglichen werden, den

Neigungswinkel α der Senkrechte zur Tangentialebene des Punktes gegenüber der Messebene des modularen Bestandteils 1.

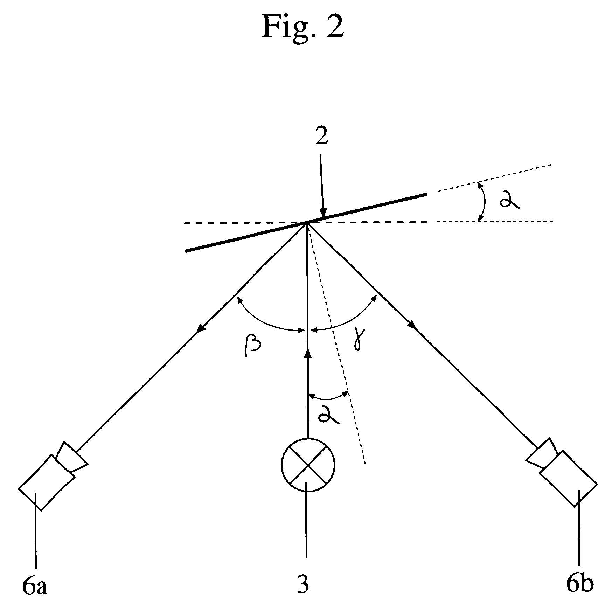

Dieser Winkel α ist in Figur 2 dargestellt, in der schraffiert ein idealer Oberflächenabschnitt des Körpers 2 (d.h. ein senkrecht zum einfallenden Lichtstrahl angeordneter) und mit grobem Strich ein realer Oberflächenabschnitt des Körpers 2 (d.h. ein geneigt zum einfallenden Strahl angeordneter) eingezeichnet sind. Die Winkel β und γ bezüglich der beiden Matrixkameras 6a, 6b beziehen sich auf die oben genannte, ideale Situation. Sie sind bevorzugter Weise identisch. Im realen Fall, d.h. jener einer zum einfallenden Strahl geneigten Fläche, wird der Winkel bezüglich der Kamera 6a β plus α sein, während jener bezüglich der Kamera 6b wird γ minus α sein.

Grunglegend für die von der Bearbeitungseinheit 8 durchgeführten Auswertungen ist die bekannte Kenntnis, dass ein Laserlichtstrahl, der senkrecht auf eine Fläche einfällt, symetrisch reflektiert wird, während, bei einem Lichtstrahl der schräg zur Fläche einfällt, die reflektierte Lichtmenge in Richtung des spitzen Winkels kleiner ist als jene die in Richtung des stumpfen Winkels reflektiert wird.

Die Kenntnis des Betrages des Neigungswinkels α der Senkrechte zur Tangentialebene des Punktes gleicht also der Kenntnis der Neigung der Oberfläche in diesem Punkt und man kann so an jedem Punkt feststellen, ob die mit der Lasertriangulation erhaltene Koordinaten der anliegenden Punkte mit der in diesem Punkt festgestellten Neigung vereinbar sind.

Die bekannte Vorschubrichtung und die Messebene des modularen Bestandteils 1 können je nach Bequemlichkeit sowohl zueinander parallel als auch zueinander senkrecht stehen, dies hängt davon ab, wie der modulare Bestandteil 1 angeordnet wird. In Figur 1 ist die zweite Situation dargestellt, d.h. die Vorschubrichtung und die Messebene stehen zueinander senkrecht. Diese Situation ist jene, die am häufigsten vorkommt, da sie es erlaubt, bessere Ergebnisse zu erhalten, aber im Prinzip kann man nicht eine parallele Anordnung ausschließen.

Der modulare Bestandteil 1 wird fabrikmäßig zusammengebaut, immer für sich selber gleich, unabhängig von seiner zukünftigen Verwendung.

Er findet dann, wie erwähnt, in den Vorrichtungen, in einer den lokalen Bedürfnissen angepassten Anzahl Verwendung und wird je nach Angemessenheit und Notwendigkeit mit einer Messebene vorgesehen, die zur bekannten Vorschubrichtung senkrecht oder parallel steht. Die einzelnen Messebenen der verschiedenen modularen Bestandteile 1 bilden alleine oder zusammen eine oder mehrere Messebenen der Vorrichtung.

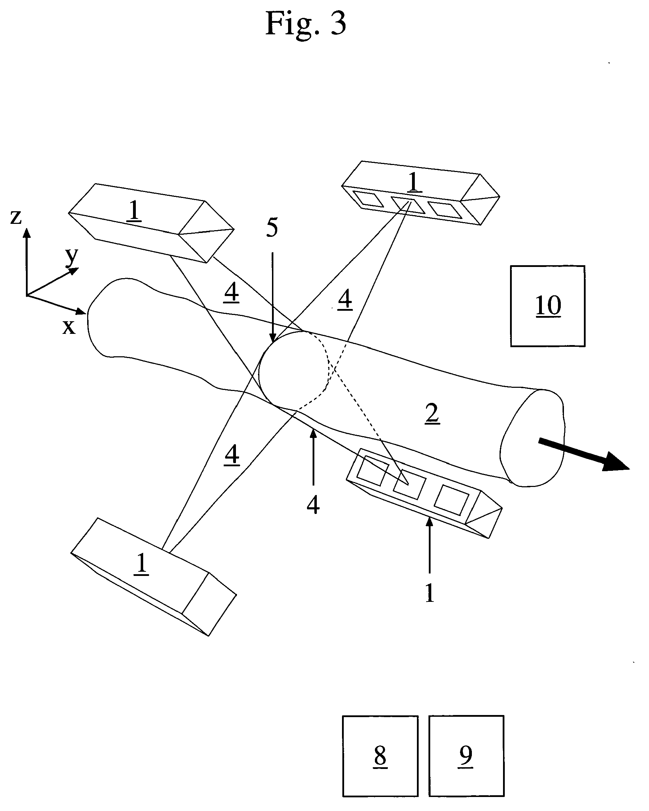

In den Figuren 3 bis 5 sind schematisch einige mögliche erfindungsgemäße Ausführungsformen solcher Vorrichtungen angegeben, um in einem kartesischen Koordinatensystem X, Y, Z die dreidimensionale, virtuelle Rekonstruktion der Oberflächen von Körpern 2 durchzuführen, die längs einer bekannten Vorschubrichtung und mittels eines Fördermittels eine Messebene der Vorrichtung durchqueren.

Solche Vorrichtungen umfassen eine Vorrichtung 10 zum Messen des Vorschubweges längs der Vorschubrichtung, eine Steuereinheit 8 zur Steuerung der Betriebsweise der Vorrichtung und eine Verarbeitungseinheit 9 zur Auswertung der Daten und zur Berechnung der dreidimensionalen, virtuellen Rekonstruktion.

In Figur 3 ist eine erste Ausführungsform einer solchen erfindungsgemäßen Vorrichtung dargestellt, bei der die Körper 2 Stämme sind und die bekannte, durch den Pfeil angegebene Vorschubrichtung mit der Längsrichtung der Stämme zusammenfällt. Gemäß der Erfindung, umfasst in diesem Fall die Vorrichtung überdies vier modulare Bestandteile 1. Diese werden derart angeordnet, dass ihre Messebene und die Vorschubrichtung zueinander senkrecht liegen, und sie werden überdies symmetrisch um den Stamm 2 herum gelegt, zwei in einer oberen, schrägen Position und zwei in einer unteren schrägen Position, derart dass die jeweiligen ebenen Laserlichtbündel 4 eine einzige Messebene der Vorrichtung erzeugen.

Das System von kartesischen Koordinaten X, Y, Z kann beispielsweise mit einer Achse X längs der Vorschubrichtung, einer Achse Z vertikal und einer Achse Y senkrecht zur Ebene X-Z gewählt werden.

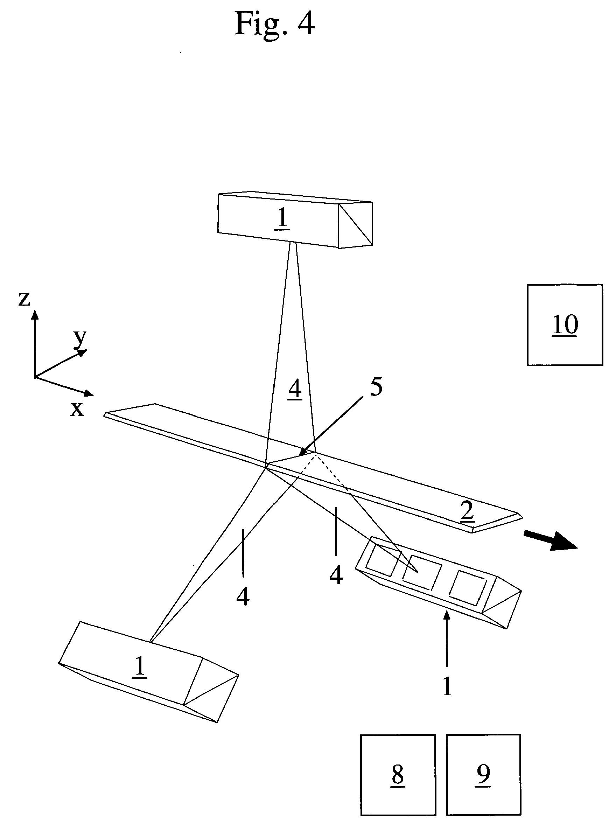

In Figur 4 ist eine zweite Ausführungsform einer solchen, erfindungsgemäßen Vorrichtung dargestellt, bei der die Körper 2 Bretter oder Balken sind, d.h. Körper die zuvor schon besäumt wurden und leichter zu messen sind, und die bekannte, durch einen Pfeil angegebene Vorschubrichtung wieder mit derer Längsrichtung zusammenfällt. Gemäss der Erfindung, umfasst in diesem Fall die Vorrichtung überdies drei modulare Bestandteile 1. Diese sind derart angeordnet, dass ihre Messebene und die Vorschubrichtung zueinander senkrecht stehen und sie werden überdies einer oberhalb des Brettes oder des Balkens 2 und zwei darunter in schrägen, symmetrischen Positionen angeordnet, derart, dass die jeweiligen ebenen Laserlichtbündel 4 eine einzige Messebene der Vorrichtung erzeugen.

Das System von kartesischen Koordinaten X, Y, Z kann z.B. mit einer Achse X längs der Vorschubrichtung, einer Achse Z vertikal und einer Achse Y senkrecht zur Ebene X-Z gewählt werden.

Wie erwähnt, können die Messebene und die Vorschubrichtung auch zueinander parallel sein. Im vorliegenden Fall z.B. würde dies bedeuten dass das Brett 2 parallel zur Y-Achse vorgeschoben wird. Dies würde es erlauben, die Breite eines einzigen Schnittes des Brettes 2 zu messen, jedoch könnte dies genügen z.B. in dem Fall in dem es wünschenswert ist, eine Vielzahl von Brettern 2, die der Vorrichtung von vorangehenden Bearbeitungen zugeführt werden, automatisch in Gruppen ähnlicher Breite zu sortieren.

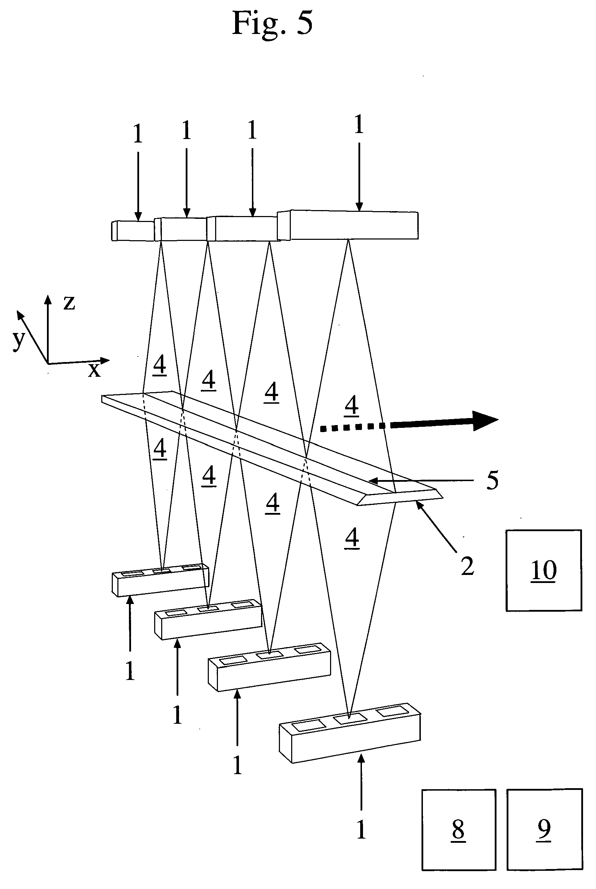

In Figur 5 ist eine dritte Ausführungsform einer solchen, erfindungsgemäßen Vorrichtung dargestellt, in dem Fall, in dem die Körper 2 wieder Bretter oder Balken sind, jedoch die Vorschubrichtung zu derer Längsrichtung senkrecht steht. Gemäß der Erfindung, umfasst in diesem Fall die Vorrichtung überdies eine Vielzahl von modularen Bestandteilen 1. Diese sind derart angeordnet, dass ihre Messebene und die Vorschubrichtung senkrecht stehen und sie überdies teilweise oberhalb des Brettes oder des Balkens 2 und teilweise darunter angeordnet, derart, dass die jeweiligen ebenen Laserlichtbündel 4 nacheinander angereiht sind, um eine einzige Messebene der Vorrichtung zu erzeugen. Die Anzahl der modularen Bestandteile 1 muss sicherstellen, dass die gesamte Länge des Brettes oder des Balkens 2 gemessen werden kann.

Das System von kartesischen Koordinaten X, Y, Z kann beispielsweise mit der X-Achse längs der Vorschubrichtung, einer Z-Achse vertikal und einer Y-Achse senkrecht zur Ebene X-Z gewählt werden.

Auch in diesem Fall könnten die Messebene und die Vorschubrichtung zueinander parallel sein. Im vorliegenden Fall z.B. würde dies bedeuten dass das Brett 2 parallel zur Y-Achse vorgeschoben wird. Dies würde es erlauben, die Länge eines einzigen Schnittes des Brettes 2 zu messen, jedoch könnte dies z.B. genügen, in dem Fall, in dem es wünschenswert ist, eine Vielzahl von Brettern 2, die der Vorrichtung von vorangehenden Bearbeitungen zugeführt werden, automatisch in Gruppen ähnlicher Breite zu sortieren.

## Patentansprüche

1. Modularer Bestandteil (1) von Vorrichtungen zur Ausführung, in einem kartesischen Koordinatensystem (X, Y, Z), der dreidimensionalen virtuellen Rekonstruktion der Oberflächen von Körpern (2), die, längs einer bekannten Vorschubrichtung und mittels eines Fördermittels, eine bekannte Messebene der Vorrichtung durchqueren, umfassend:
mindestens eine Laserlichtquelle (3), die in einer Position bekannter Koordinaten angeordnet ist und auf Befehl ein ebenes Laserlichtbündel (4) aussendet, das mit der Messebene des modularen Bestandteiles (1) zusammenfällt und auf der Oberfläche des Körpers (2) einfällt, wobei von diesem ein Streifen (5) beleuchtet wird,
eine erste Matrixkamera (6a), die auf Befehl eine eigene Fotografie des beleuchteten Streifens (5) erzeugt und in einer Position bekannter Koordinaten derart angeordnet ist, dass ihre optische Achse mit der Messebene des modularen Bestandteiles einen spitzen Winkel bildet, wobei der Abstand zwischen der Laserlichtquelle (3) und jedem Punkt des beleuchteten Streifens (5) mit der sogenannten Lasertriangulation gemessen und
berechnet wird, **dadurch gekennzeichnet, dass** er überdies umfasst:
eine zweite Matrixkamera (6b) mittels der es möglich ist, ein zweites Mal mit der sogenannten Lasertriangulation den Abstand zwischen der Laserlichtquelle (3) und jedem Punkt des beleuchteten Streifens (5) zu messen und zu berechnen und die auf Befehl eine eigene Fotografie des beleuchteten Streifens (5) erzeugt und in einer Position bekannter Koordinaten derart angeordnet ist, dass ihre optische Achse und die optische Achse der ersten Matrixkamera (6a) auf gegenüberliegenden Seiten der Messebene des modularen Bestandteiles liegen, und
eine Aufnahme (7) an der die Laserlichtquelle (3) und die beiden Matrixkameras (6a, 6b) befestigt sind, welche mindestens von einer Seite her geöffnet ist, um den Durchtritt des Laserlichtes zu ermöglichen und zwei elektrische und/oder elektronische Anschlüsse aufweist, von denen einer an eine Steuereinheit (8) der Vorrichtung und der andere an eine Verarbeitungseinheit (9) der Vorrichtung anschliesst,
wobei die Steuereinheit (8) den Betrieb der Laserlichtquelle (3) und der beiden Matrixkameras (6a, 6b) steuert, und
wobei die Verarbeitungseinheit (9), welche die Koordinaten der Laserlichtquelle (3) und der beiden Matrixkameras (6a, 6b) sowie die Vorschubrichtung des Körpers (2) und die Koordinaten der sich in Bewegung befindlichen Auflageebene des Transportmittels kennt, Punkt für Punkt des beleuchteten Streifens (5) die von den beiden Matrixkameras (6a, 6b) erzeugten Fotografien zueinander vergleicht, insbesondere den von den beiden Matrixkameras (6a, 6b) erfasste Helligkeitsunterschied, um den Neigungswinkel (α) der Senkrechte zur Tangentialebene des Punktes gegenüber der Messebene des modularen Bestandteils zu bestimmen.

2. Modularer Bestandteil nach Anspruch 1, **dadurch gekennzeichnet, dass** die bekannte Vorschubrichtung und die Messebene zueinander parallel sind.

3. Modularer Bestandteil nach Anspruch 1, **dadurch gekennzeichnet, dass** die bekannte Vorschubrichtung und die Messebene zueinander senkrecht sind.

4. Vorrichtung zur Ausführung, in einem kartesischen Koordinatensystem (X, Y, Z), der dreidimensionalen virtuellen Rekonstruktion der Oberflächen von Körpern (2), die, längs einer bekannten Vorschubrichtung und mittels eines Fördermittels, eine bekannte Messebene der Vorrichtung durchqueren, umfassend:
eine Vorrichtung (10) zur Messung des Vorschubweges längs der Vorschubrichtung;
eine Steuereinheit (8) zur Steuerung des Betriebes der Vorrichtung, und
eine Verarbeitungseinheit (9) zur Bewertung der Daten und Berechnung der dreidimensionalen, virtuellen Rekonstruktion,
**dadurch gekennzeichnet, dass** sie überdies eine Vielzahl von modularen Bestandteilen (1) umfasst, von denen jeder seinerseits umfasst:
mindestens eine Laserlichtquelle (3), die in einer Position bekannter Koordinaten angeordnet ist und auf Befehl ein ebenes Laserlichtbündel (4) aussendet, das mit der Messebene des modularen Bestandteiles (1) zusammenfällt und auf der Oberfläche des Körpers (2) einfällt, wobei von diesem ein Streifen (5) beleuchtet wird,
eine erste Matrixkamera (6a), die auf Befehl eine eigene Fotografie des beleuchteten Streifens (5) erzeugt und in einer Position bekannter Koordinaten derart angeordnet ist, dass ihre optische Achse mit der Messebene des modularen Bestandteiles einen spitzen Winkel bildet, wobei der Abstand zwischen der Laserlichtquelle (3) und jedem Punkt des beleuchteten Streifens (5) mit der sogenannten Lasertriangulation gemessen und berechnet wird,
und überdies seinerseits umfasst:
eine zweite Matrixkamera (6b) mittels der es möglich ist, ein zweites Mal mit der sogenannten Lasertriangulation den Abstand zwischen der Laserlichtquelle (3) und jedem Punkt des beleuchteten Streifens (5) zu messen und zu berechnen und die auf Befehl eine eigene Fotografie des beleuchteten Streifens (5) erzeugt und in einer Position bekannter Koordinaten derart angeordnet ist, dass ihre optische Achse und die optische Achse der ersten Matrixkamera (6a) auf gegenüberliegenden Seiten der Messebene des modularen Bestandteiles liegen, und
eine Aufnahme (7) an der die Laserlichtquelle (3) und die beiden Matrixkameras (6a, 6b) befestigt sind, welche mindestens von einer Seite her geöffnet ist, um den Durchtritt des Laserlichtes zu ermöglichen und zwei elektrische und/oder elektronische Anschlüsse aufweist, von denen einer an eine Steuereinheit (8) der Vorrichtung und der andere an eine Verarbeitungseinheit (9) der Vorrichtung anschliesst,
wobei die jeweiliegn ebenen Laserlichtbündel (4) der modularen Bestandteile (1) eine einzige Messebene der Vorrichtung erzeugen,
wobei die Steuereinheit (8) den Betrieb der Laserlichtquelle (3) und der beiden Matrixkameras (6a, 6b) steuert, und
wobei die Verarbeitungseinheit (9), welche die Koordinaten der Laserlichtquelle (3) und der beiden Matrixkameras (6a, 6b) sowie die Vorschubrichtung des Körpers (2) und die Koordinaten der sich in Bewegung befindlichen Auflageebene des Transportmittels kennt, Punkt für Punkt des beleuchteten Streifens (5) die von den beiden Matrixkameras (6a, 6b) erzeugten Fotografien zueinander vergleicht, insbesondere den von den beiden Matrixkameras (6a, 6b) erfasste Helligkeitsunterschied, um den Neigungswinkel (α) der Senkrechte zur Tangentialebene des Punktes gegenüber der Messebene des modularen Bestandteils zu bestimmen.

5. Vorrichtung nach Anspruch 4, **dadurch gekennzeichnet, dass** die Körper (2) Stämme sind und die Vorschubrichtung mit ihrer Längsrichtung zusammenfällt und überdies die modularen Bestandteile (1) vier sind und symmetrisch um den Stamm (2) herum angeordnet sind, zwei in einer oberen, schrägen Position und zwei in einer unteren schrägen Position.

6. Vorrichtung nach Anspruch 4, **dadurch gekennzeichnet, dass** die Körper (2) Bretter oder Balken sind und dass die Vorschubrichtung mit ihrer Längsrichtung zusammenfällt und dass überdies die modularen Bestandteile (1) drei sind, von denen einer oberhalb des Brettes oder des Balkens (2) und zwei darunter in symmetrischen, schrägen Positionen angeordnet sind.

7. Vorrichtung nach Anspruch 4, **dadurch gekennzeichnet, dass** die Körper (2) Bretter oder Balken sind und dass die Vorschubrichtung zu ihrer Längsrichtung senkrecht ist und dass überdies die modularen Bestandteile (1) teilweise oberhalb des Brettes oder des Balkens (2) und teilweise darunter in Reihe angeordnet sind, derart, dass die jeweiligen, ebenen Laserlichtbündel (4) nacheinander angereiht sind.
